(19) Europäisches Patentamt

European Patent Office

Office européen des brevets

(11) Publication number : 0 434 430 A1

# (12) EUROPEAN PATENT APPLICATION

(21) Application number : 90314030.9

(22) Date of filing : 20.12.90

(51) Int. Cl.⁵ : **B23K 20/12, C23C 26/00**

(30) Priority : 22.12.89 GB 8929060
06.06.90 GB 9012573
20.08.90 GB 9018226
06.06.90 GB 9012574

(43) Date of publication of application :
26.06.91 Bulletin 91/26

(84) Designated Contracting States :
CH DE DK ES FR GB IT LI NL SE

(71) Applicant : THE WELDING INSTITUTE
Abington Hall
Abington Cambridge CB1 6AL (GB)

(72) Inventor : Nicholas, Edward David
106 Abbotts Road
Haverhill, Suffolk, CB9 0DH (GB)
Inventor : Thomas, Wayne Morris
6 Howe Road
Haverhill, Suffolk, CB9 9NJ (GB)
Inventor : Lilley, Roger Hedley
83 Barton Road
Comberton, Cambridge (GB)

(74) Representative : Skone James, Robert
Edmund et al
GILL JENNINGS & EVERY 53-64 Chancery
Lane
London WC2A 1HN (GB)

(54) Surfacing method.

(57) A method of providing a material surface on a substrate (1) comprises applying a consumable member to the substrate under pressure ; and moving the member and substrate relative to one another along a path (4) and generating heat at the interface between the member and the substrate so that material is laid down on the substrate along the path. The heat generating step comprises imparting to the relative movement between the member and substrate (1) a repetitive rectilinear or orbital motion (3) which is in the direction of relative movement (4) between the member and the substrate.

EP 0 434 430 A1

## SURFACING METHOD

The invention relates to methods for providing a material surface on a substrate.

Conventional methods of providing a material surface on a substrate are of the kind comprising applying a consumable member to the substrate under pressure ; and moving the member and substrate relative to one another along a path and generating heat at the interface between the member and the substrate so that material is laid down on the substrate along the path. Such methods are hereinafter referred to as of the kind described.

Conventional methods of the kind described typically make use of a circular cross-section consumable member which is rotated at a suitable speed and traversed along the path so that heat generated by friction between the consumable member and the substrate causes the consumable material to become plasticised and to transfer and be laid down on the substrate.

In EP-A-0337691 we have described various improvements to methods of the kind described but one of the problems with some applications of these methods and indeed other conventional methods is that at the edges of the deposit there is a significant weakness in the bond between the material and the substrate. This is due to the short time for which these areas of the substrate are exposed to the consumable member as compared with those areas of the substrate exposed to the centre of the consumable member. This lack of effective bond means that up to approximately 25% of the deposit may have to be removed.

A paper by Vavilov and Voinou in Friction Welding 1964 pages 7 and 8 describes a friction surfacing method in which a consumable wire or strip is vibrated while material is laid down. This suffers from the problems of variation in bond strength mentioned above.

In accordance with one aspect of the present invention, a method of the kind described is characterised in that the heat generating step comprises imparting to the relative movement between the member and substrate a repetitive, rectilinear or orbital motion in which a component of the repetitive motion is in the direction of relative movement between the member and the substrate.

We have realised that a much more uniform strength surface can be provided by imparting an additional rectilinear, or possibly an orbital, repetitive motion to the relative movement between the movable member and the substrate which results in a much more even exposure of the substrate to the consumable member.

Preferably, the cross-section of the consumable member is square or rectangular. This leads to a much stronger and more evenly bonded surface on the substrate. However, the consumable could also have a corrugated or curved form which increases its resistance to unwanted bonding or deflection.

In the preferred arrangement, the consumable member moves in a repetitive, linear to and fro movement parallel with the resultant direction of traverse of the consumable member relative to the substrate. This ensures that substantially 100% of the area of the substrate which is exposed to the consumable member is evenly exposed. Also, in this case, the material surface may be laid down in a groove in the substrate. Such grooves can be relatively deep.

In other arrangements, the consumable member and substrate may be moved relatively in a repetitive, linear to and fro movement in a direction transverse (but not orthogonal) to the resultant traverse direction of the consumable member relative to the substrate.

The invention is particularly useful in enabling wide surfaces to be laid down on the substrate. For example, surfaces having widths of up to 250 mm can be laid down in a single operation. Furthermore, the use of square or rectangular cross-section consumable members simplifies the overall handling of those consumable members as compared with conventional rotary circular cross-section members.

The consumable member may comprise a solid material member or be of the form described in EP-A-0337691 in which an outer body is provided which contains an insert of a different material which is laid down onto the substrate.

The consumable member and/or the substrate may be metallic or plastics. The method can be used to lay down a metal matrix composite (MMC). MMC can boost component stiffness, increase strength, produce vibration damping, reduce thermal expansion and improve wear resistance.

Examples of suitable ceramics for MMC's are silicon carbide — SiC, silicon nitride — $Si_3N_4$, boron carbide — BC, titanium dioxide — $TiO_2$, boron nitride — BN, alumina — $Al_2O_3$, aluminium nitride — AlN, zirconia — $ZrO_2$ (transformation toughening), silica — $SiO_2$, and also compounds of ceramics ie. sialon — $Si_3N_4/AlN/Al_2O_3$, and mixtures, e.g. corundum — $Al_2O_3 + SiO_2$.

In other applications, the invention can be used to provide buffer (transition) layers. For example austenitic stainless steel can be provided onto low alloy steel or martensitic steel components to enable deposition/adhesion characteristics for subsequent (stellite) cobalt base alloy.

In some cases the invention can be applied under water or other fluid.

As mentioned above, the consumable member and substrate may be the same or different materials. With dissimilar materials, particularly where one material does not flow appreciably, there is little opportunity for removal of contaminates or oxides from the material for which displacement is negligible. Frequently this limits the range of operating conditions which are found to be suitable for joining dissimilar metals or alloys. This problem is particularly evident in friction surfacing, where virtually no material is displaced from the surface of the component on to which the consumable member or other component is being deposited.

In the past, surfaces have been degreased or machined which reduces certain contaminations but does not for example eliminate the oxide layer which forms naturally on metals and their alloys. In other proposals one of the surfaces has been plated with a suitable intermediary material to which the deposited material or component to be friction welded is joined. This is also unsatisfactory in introducing yet another material into the joint.

Preferably, at least one of the surfaces of the consumable member and substrate is treated with an agent to remove contaminates, the agent being removed at least on completion of the surfacing process.

In one example, the agent is activated or energised by the frictional movement itself.

The active agent may comprise a powder, paste, liquid, or gaseous atmosphere and is used to etch or dissolve the surface layer of the component to reduce or eliminate the natural oxide or other surface contaminate.

An example of a suitable paste is a flux compound Murex Aluminium Welding Saffire Flux such as is used in oxigas welding of steels. This flux is preferably pasted on to the substrate. At the elevated temperature of the friction surfacing process the flux is activated and chemically attacks the surface but as the friction surfacing operation progresses it is dispersed so as not to remain as a barrier between the components to be joined. The beneficial action of this flux is illustrated in an extreme case of depositing an aluminium alloy onto a similar aluminium plate by friction surfacing, where the interface region is no longer apparent where the flux paste has been applied, prior to friction surfacing to the substrate material.

In a second case, the surface treatment may be carried out prior to the frictional surfacing process, the surface being protected by suitable means from significant further contamination or oxidation until the surfacing process is completed. For example, the material to be surfaced may be etched in a suitable chemical re-agent and then friction welded or surfaced in the presence of the etchant or alternatively under a protective fluid layer (such as oil or water) or gaseous protection such as an inert gas or non reactive gas such as argon or nitrogen respectively. Sodium Floride may be used for stainless steel and nickel based alloy. The objective of the flux or etchant is to reduce the contaminated or oxide layers on the material such that the friction welding or friction surfacing process is more effective and higher bond strengths are achieved, even though one component is virtually not contributing directly to the plasticised intermediate layer which is formed.

The plasticised material (which is largely developed by the consumable member) is at a sufficient temperature and pressure, together with relative movement, to disperse the active agent (if still present while frictioning) so as to effect a reliable join.

Examples of application are the use of fluxes for the friction surfacing of aluminium and its alloys, and similar materials with a tenacious oxide film.

The invention is also applicable to applying a material surface on a convex surface of the substrate. for example, the substrate could comprise a piston.

Typically, the consumable member is repeatedly oscillated in a fixed position while the substrate is traversed past the consumable member. In the case of a cylindrical substrate such as a piston, the substrate is simply rotated.

Some examples of methods and apparatus for providing a material surface on a substrate in accordance with the present invention will now be described with reference to the accompanying drawings, in which :—

Figure 1A illustrates a longitudinal linear reciprocal movement ;

Figure 1B illustrates a longitudinal linear movement at an angle less than 45° to the traverse direction ;

Figure 1C illustrates a transverse linear reciprocal movement at an angle greater than 45° to the traverse direction ;

Figures 2A-2C are cross-sections through three different composite consumables ;

Figure 3 is a cross-section through a corrugated consumable ;

Figure 4 is a cross-section through a substrate having a deep groove ;

Figures 5A-5D illustrate the provision of material surfaces on a piston ;

Figure 6 illustrates the provision of a surface on a disc using a wedge shaped consumable which is moved in an orbital manner ;

Figure 7 is a view similar to Figure 6 but in which the consumable moves in a linear manner ;

Figures 8A and 8B are a plan and cross-section respectively showing the provision of a material surface on a stack of plates ;

Figure 9 is a longitudinal section through a tool for causing linear movement of a workpiece ;

Figures 10A and 10B are views taken on the line A-A in Figure 9 ;

Figure 11 is a view similar to Figures 9 but of a tool for generating an orbital motion of the consumable ; and,

Figure 12 is an end elevation of the tool shown in Figure 11 ;

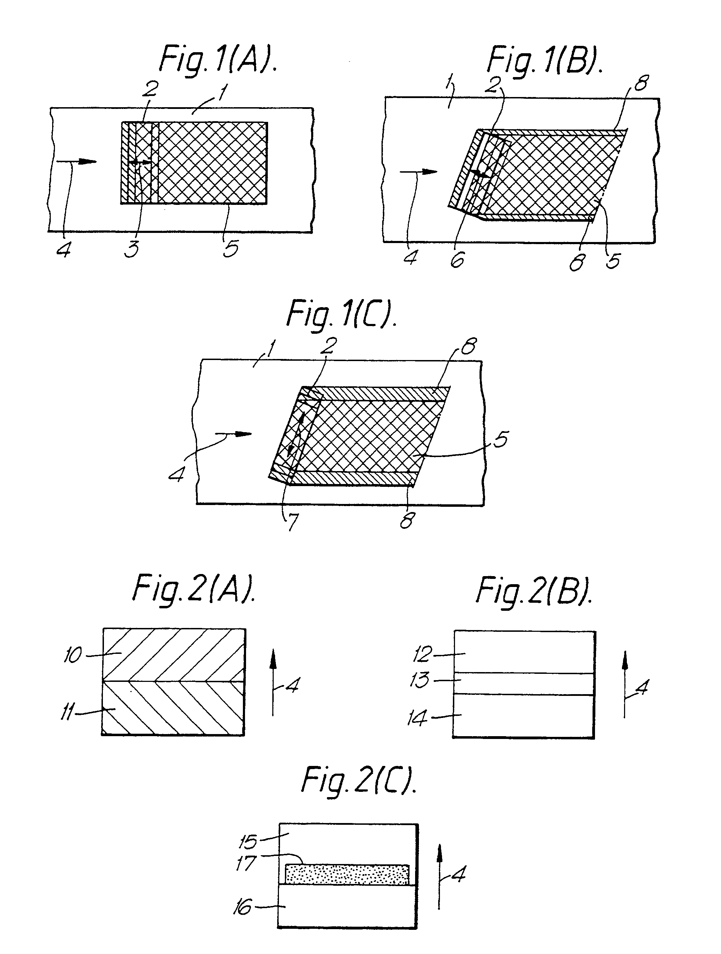

Figure 1A illustrates a metallic substrate 1 onto which is urged a rectangular consumable, metallic member 2. The member 2 is held in a linear, reciprocable holder (not shown) so that it can reciprocate linearly in the direction indicated by arrows 3 while the substrate 1 moves linearly in the direction of the arrow 4. As can be seen in Figure 1A, this combination of movements causes a deposit having an elongate, rectangular form 5 to be laid down onto the substrate 1.

Typically, the consumable member 2 is moved in the directions of the arrow 3 at between 30 and 200 cycles per second with an amplitude between 0.5 and 3 millimetres. The long dimension of the consumable member 2 can be large compared with conventional rotary consumable members and for example could exceed 100 mm. In this example, substantially all of the region of the substrate 1 which receives the deposit 5 is exposed evenly to the consumable member 2. In other words, a substantially uniform "surfacing action" is provided across the complete interface.

Figure 1B illustrates an arrangement in which the consumable member 2 is moved to and fro, linearly in the directions 6 at substantially 25° to the traverse direction 4.

Figure 1C illustrates a third arrangement in which the consumable member 2 reciprocates linearly along its long dimension in the directions of the arrows 7 at sustantially 65° to the traverse direction 4.

It will be seen that the methods of Figure 1B and 1C do not result in a completely even exposure of the substrate 1 for the consumable member 2. In each of these cases there is a small region 8 at either side of the central region which is only exposed to the consumable member 2 for a proportion of the time for which the central region is exposed. However, in some circumstances, this is not a problem and is outweighed by the advantages of being able to utilise a consumable member 2 of desired shape in contrast to the previous use of a circular cross-section consumable.

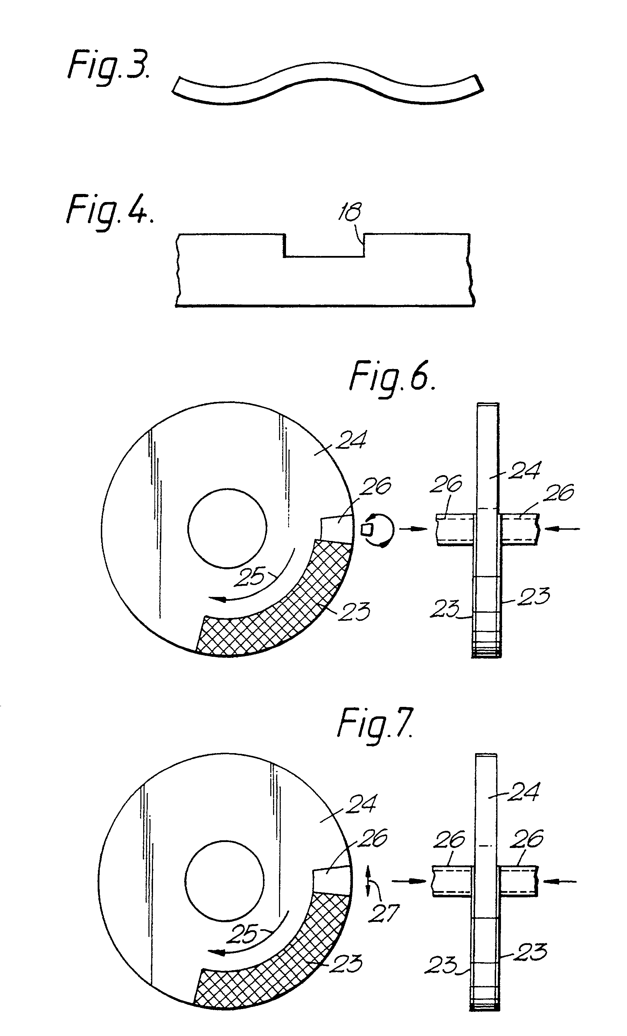

Rectangular consumable members are generally preferred although square or indeed other cross-sections are also possible. Figures 2A-2C illustrate three different types of consumable member. Figure 2A illustrates a bi-metallic consumable member formed from two rectangular blocks of dissimilar metals 10, 11 bonded together. Figure 2B illustrates a triple laminate consumable member formed by three material blocks 12-14 bonded together. The material blocks 12-14 could be metallic or non-metallic.

Figure 2C illustrates a consumable formed by two solid outer members 15, 16 such as metals, which define a cavity 17 holding a powder such as a ceramic.

Each of the consumable members shown in Figures 2A-2C is orientated, in the case of a method similar to that shown in Figure 1A, as shown in Figure 2 with the direction of movement of the substrate 1 being indicated by arrow 4 in Figure 2.

Figure 3 illustrates a cross-section through another form of consumable member which is corrugated. This increases the resistance of the consumable to unwanted bending compared with a rectangular member of similar dimensions. In many cases the substrate 1 will present a planar surface to the consumable member 2. However, in some cases the substrate 1 can be provided with a groove 18 (Figure 4). For example, a substrate having a thickness of 15 mm could have a groove 18 with a depth of 1-5 mm or more. The base of the groove 18 can be accurately and uniformly surfaced by using the method shown in Figure 1A.

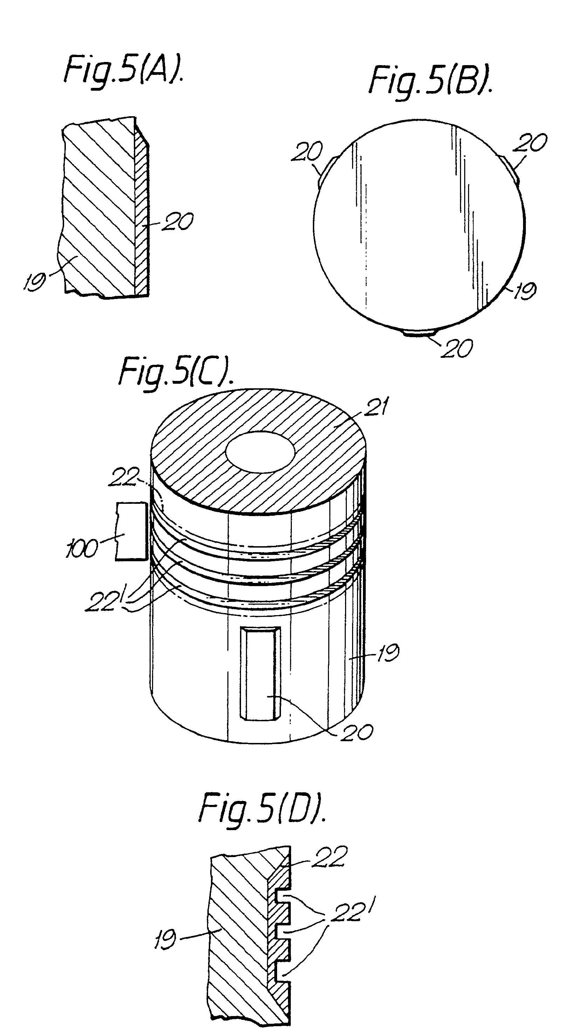

One application of the technique is illustrated in Figure 5 in which the method is used to form surfaces of a metal matrix composite material on a piston. Figure 5B illustrates a piston 19 having a number of wear pads 20 spaced around its circumference. Figure 5A illustrates part of a section through a wear pad 20. The wear pads 20 are formed by making use of a consumable member (not shown) constituted by the materials which when combined form a metal matrix composite, this combination taking place during the laying down of the surface using a technique similar to that shown in Figure 1A. As shown in Figure 5C, a metal matrix composite (MMC) layer 21 is also laid down on the front face of the piston 19. Finally an MMC deposit is laid down in an annular groove 22 around the piston 19 with a consumable member shown schematically at 100. The piston 19 is slowly rotated about its axis while the member 100 is oscillated in a rectilinear manner tangentially to the piston surface and within the groove 22. The MMC deposit is then machined to generate three annular grooves 22' (Figures 5C and 5D). The use of this technique to form MMC surfaces leads to the generation of longer lasting wear surfaces which is particularly appropriate in the case of large marine pistons, for example, where it is very time consuming and costly to remove the piston for servicing and the like.

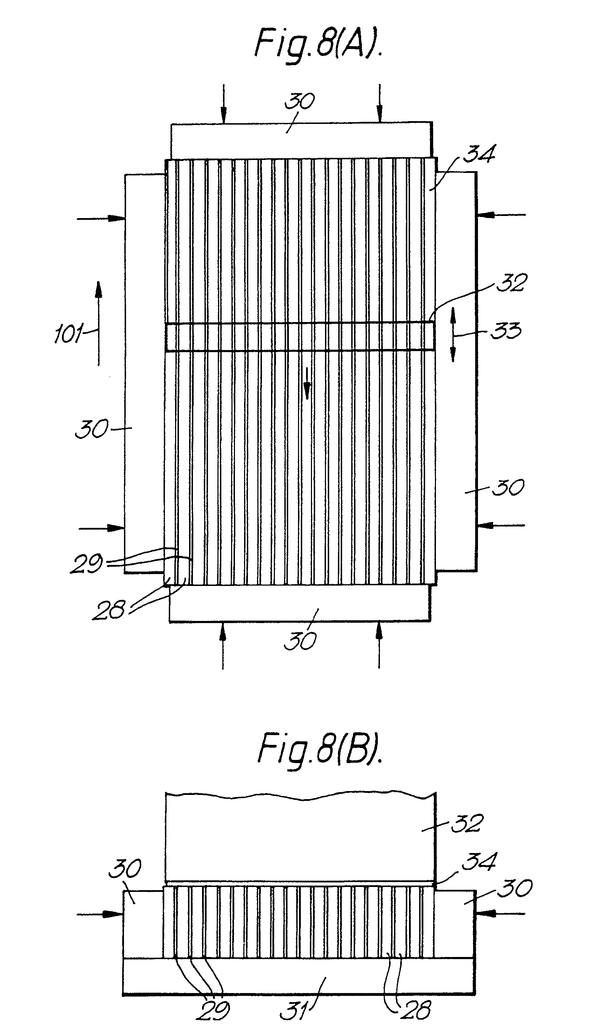

Figure 6 illustrates another method in which a surface 23 is laid down around the circumference and on each side of a disc 24, such as a brake disc. In this case, the disc 24 is rotated in the direction of an arrow 25 between a pair of consumable members 26 which are urged against the facing surfaces of the disc 24. Each consumable member 26 has a wedge shape and is moved in an orbital motion, as shown.

Figure 7 is similar to Figure 6 but in this case the consumable members 26 are reciprocated linearly as shown by an arrow 27.

The use of a wedge shaped consumable member 26 is important in the case of providing surfaces on discs since the radially inner surface must have a shorter dimension than the radially outer surface to enable an even deposit to be achieved.

Figures 8A and 8B illustrate apparatus which enables a material surface to be laid down on a stack of blades or plates 28 separated in this example by a number of ceramic separators 29. The apparatus comprises a set of four clamps 30 (Figure 8A) between which the plates 28 and separators 29 are stacked, the plates and separators resting on a support 31 (Figure 8B). A consumable member 32 which may have any suitable form but with a rectangular cross-section as shown is brought into contact with the upper surfaces of the plates 28 and reciprocated linearly in the directions of the arrows 33 so that a deposit 34 is laid down on the exposed edges of the plates. During this reciprocal movement, the consumable and plates undergo relative linear movement indicated by an arrow 101 so that an even deposit is laid down on the plates. In one application, this technique can be used to manufacture a heat exchanger.

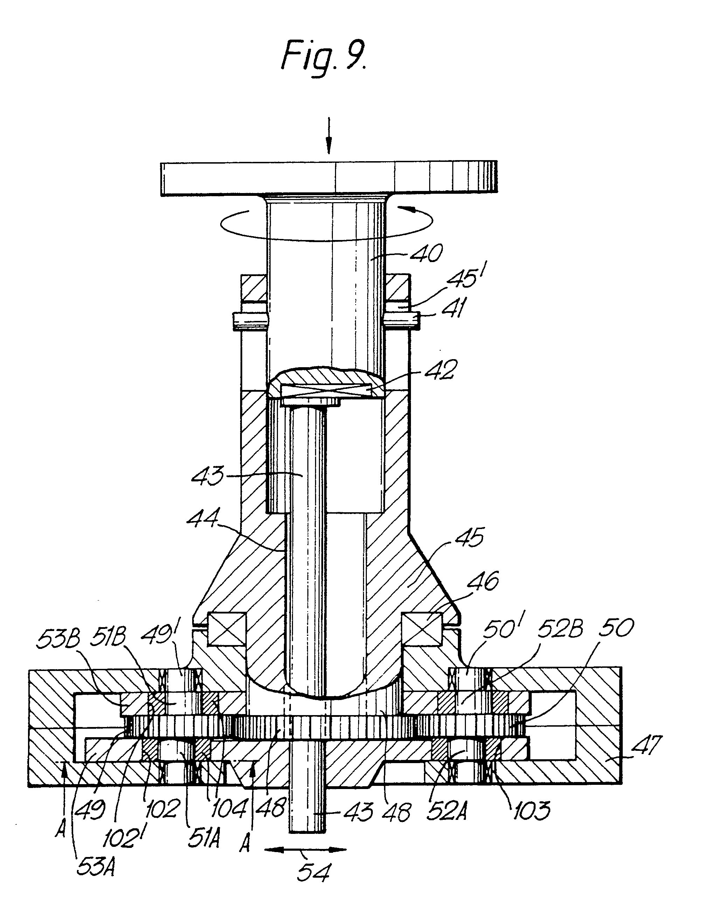

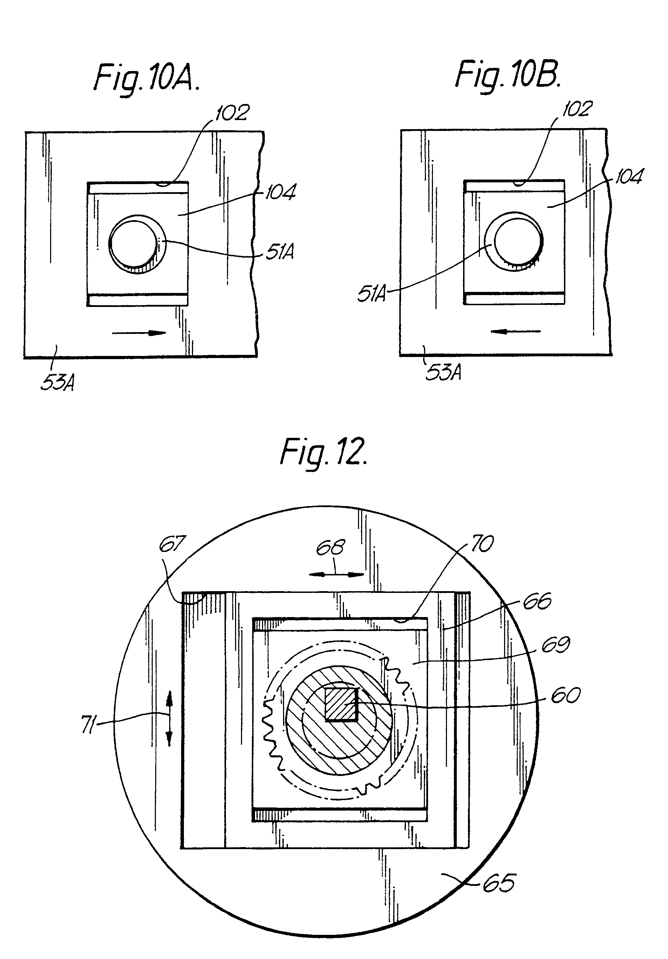

The apparatus needed to achieve the linear and orbital movements described could be formed from suitably modified friction welding apparatus such as that described in GB-A-1391616. However, we have devised new tools which are particularly suited to this application. One example of a tool is illustrated in Figure 9 and 10 and comprises a rotatable drive shaft 40 having drive pins 41 engaging in grooves 45' of a shaft 45 and is rotatably mounted via a ball plate bearing 42. A consumable member 43 similar to the member 2 in Figure 1 is positioned loosely within a bore 44 of the main shaft 45, the bore 44 being positioned concentrically relative to the axis of the shaft 45. The shaft 45 is mounted via bearings 46 to a slider holding unit 47. The end 48 of the shaft 45 defines a gear which meshes with a pair of auxiliary gears 49, 50 mounted on respective spindles 49', 50'.

Two pairs of cams 51A, 51B and 52A, 52B are fixed to respective ones of the gears 49, 50 and are rotated upon rotation of the gear 48 to cause respective sliders 53A, 53B to move linearly to and fro in the directions of the arrows 54. This to and fro movement causes the consumable member 43 also to move linearly. The slider 53B constitutes a balancing plate and moves linearly in a direction opposite to the plate 53A in response to the action of corresponding cams.

The slider 53A has a pair of apertures 102, 103 in each of which a sliding block 104 is mounted (see Figures 10A and 10B). Each block 104 has an aperture within which the respective cam 51A, 52A is a close fit. The vertical dimension of the block 104 is less than that of the corresponding aperture while the horizontal dimensions of the block and aperture are substantially the same. Thus, as can be seen in Figure 10A, during a first part of the clockwise motion of the cam 51A the block 104 is urged to the right moving the slider 53A to the right. The block 104 is then moved downwardly within the slot 102 and no movement of the slider 53A occurs. Further rotation of the cam causes leftward movement of the slider (Figure 10B) and finally as the cam completes a full rotation, the block 104 moves upwardly in the slot 102 without moving the slider 53A. Corresponding movement takes place with the block in aperture 103.

A corresponding pair of blocks 104' are mounted for movement in apertures 102', 103' in slider 53B so as to cause balancing of movement of the slider 53B.

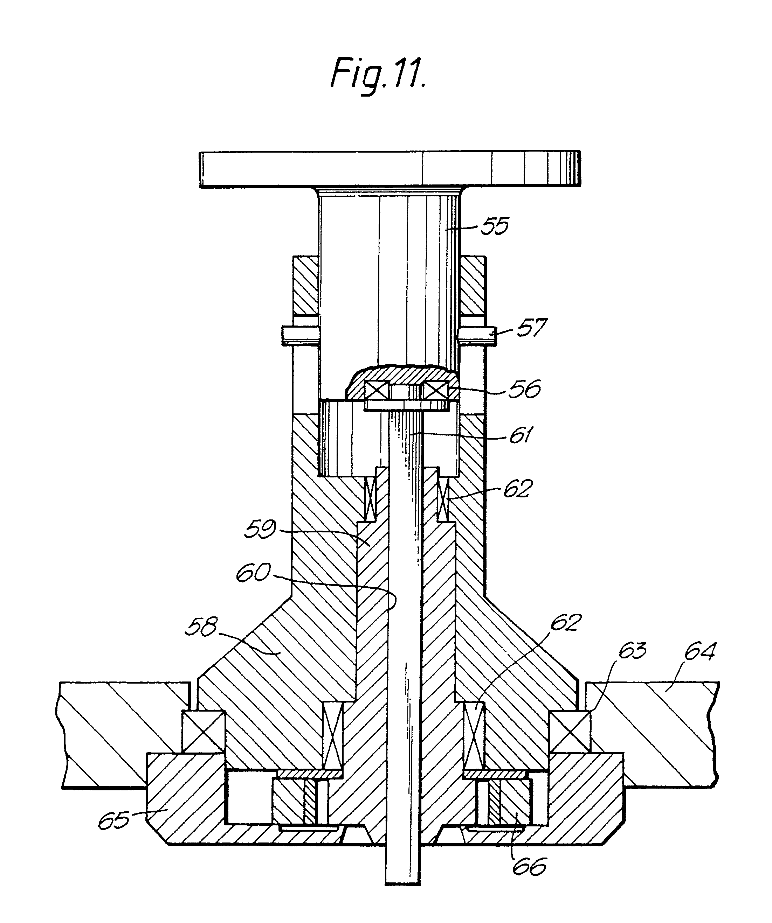

Figures 11 and 12 illustrate another device which enables an orbital motion to be imparted to the consumable.

The device shown in Figure 11 comprises a drive shaft 55 which is connected in use to a rotating spindle (not shown), the shaft being mounted via thust bearings 56 and drive pins 57 to a main shaft 58. A shaft 59 is mounted eccentrically within the shaft 58 and has a bore 60 through which a consumable 61 extends. The shaft 59 is rotatably supported in the main shaft 58 via bearings 62.

The main shaft 58 is mounted via bearings 63 to a support arm or housing 64 to which is also mounted a front plate 65. Mounted within the front plate 65 is a slider unit comprising a first slider 66 which can move within a slot 67 in the front plate 65 in the directions of the arrow 68. A second slider plate 69 is mounted within a slot 70 defined by the first slider 66 so that the slider 69 can move in the direction of the arrow 71.

As the main shaft 58 is rotated, the eccentrically mounted shaft 59 will be forced to rotate about the axis of the main shaft and this movement of the eccentrically mounted shaft is utilised in combination with the sliders 66, 69 to impart an orbital motion to the consumable 60.

## Claims

1. A method of providing a material surface (5) on a substrate (1), the method comprising applying a consumable member (2) to the substrate (1) under pressure ; and moving the member (2) and substrate (1) relative to one another along a path and generating heat at the interface between the member and the substrate so that material is laid down on the substrate along the path, characterised in that the heat generating step comprises imparting to the relative movement between the member and substrate a repetitive, rectilinear or orbital motion in which a component (3) of the repetitive motion is in the direction of relative movement between the member and the substrate.

2. A method according to claim 1, wherein the heat generating step comprises imparting a rectilinear movement in the same direction as the direction of relative movement between the member and substrate.

3. A method according to claim 1 or claim 2, wherein the cross-section of the consumable member (2) is square or rectangular.

4. A method according to any of the preceding claims, wherein the consumable member has a corrugated form.

5. A method according to any of the preceding claims, wherein the material is laid down in a groove (18) in the substrate.

6. A method according to any of the preceding claims, wherein the material is laid down on a convex surface (19) of the substrate.

7. A method according to claim 6, wherein the substrate is a piston (19).

8. A method according to claim 6 or claim 7, when dependent on claim 5, wherein the material is laid down in an annular groove (22) around the surface of the substrate.

9. A method according to claim 8, wherein subsequent to providing the material surface, the surface is machined to generate at least one annular groove (22') within the material.

10. A method according to any of the preceding claims, wherein at least one of the surfaces of the consumable member and substrate is treated with an agent to remove contaminates, the agent being removed at least on completion of the surfacing process. .

11. A method according to claim 10, wherein the agent is activated or energised by the frictional movement itself.

12. A method according to claim 10 or claim 11, wherein the active agent comprises a powder, paste, liquid, or gaseous atmosphere.

13. A method according to any of claims 10 to 12, wherein the surface treatment is carried out prior to the frictional surfacing process, the surface being protected by suitable means from significant further contamination or oxidation until the surfacing process is completed.

14. A method according to any of the preceding claims, wherein the consumable member comprises an outer body which contains an insert of a different material which is laid down onto the substrate.

Fig.1(A).

Fig.1(B).

Fig.1(C).

Fig.2(A).

Fig.2(B).

Fig.2(C).

*Fig.3.*

*Fig.4.*

18

*Fig.6.*

24
26
25
23

24
26
26
23
23

*Fig.7.*

24
26
25
23

24
26
26
27
23
23

8

*Fig.5(A).*

*Fig.5(B).*

*Fig.5(C).*

*Fig.5(D).*

## Fig.8(A).

## Fig.8(B).

# Fig. 9.

## Fig.10A.

102

104

51A

53A

## Fig.10B.

102

104

51A

53A

## Fig.12.

67

68

70

66

69

60

71

65

# Fig.11.

## EUROPEAN SEARCH REPORT

Application Number

EP 90 31 4030

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1365426 (V. D. VOZNESENSKY ET AL.) <br> * page 1, column 2, paragraph 3; figure * <br> --- | 1, 2 | B23K20/12 <br> C23C26/00 |
| X | EP-A-321863 (NIPPON YAKIN KOGYO CO.,LTD.) <br> * page 4, lines 25 - 32; figures 1, 2 * <br> --- | 1, 2 | |
| X,D | EP-A-337691 (THE WELDING INSTITUTE) <br> * the whole document * | 1, 5, 14 | |
| A | | 8 | |
| | --- | | |
| A | FR-A-2469241 (GOETZE AG) <br> * page 2, lines 24 - 29 * <br> * page 6, lines 11 - 14 * <br> --- | 1, 6, 7, 10, 11 | |
| A | DE-A-3838572 (VEB KOMBINAT POLYGRAPH "WERNER LAMBERZ") <br> * the whole document * <br> --- | 1, 10-12 | |
| A,D | FR-A-2158198 (JOSEPH LUCAS (ELECTRICAL) LIMITED) <br> ----- | | |
| | | | **TECHNICAL FIELDS SEARCHED (Int. Cl.5)** <br><br> B23K <br> C23C |

The present search report has been drawn up for all claims

| Place of search | Date of completion of the search | Examiner |
|---|---|---|
| THE HAGUE | 28 MARCH 1991 | ARAN D.D. |

EPO FORM 1503 03.82 (P0401)